# EUROPÄISCHE PATENTSCHRIFT

(11) **EP 2 702 376 B1**
(45) Veröffentlichungstag und Bekanntmachung des Hinweises auf die Patenterteilung: **23.10.2019**
(21) Anmeldenummer: 12718601.3
(22) Anmeldetag: 27.04.2012
(51) Int. Cl.: G01J 3/42, G01J 3/453, G02B 6/12, G01J 3/457

(54) **CHIPBASIERTE SPEKTROSKOPIEANORDNUNG**
CHIP-BASED SPECTROSCOPY ARRAY
DISPOSITIF DE SPECTROSCOPIE BASÉ SUR UNE PUCE

(30) Priorität: 29.04.2011 DE 202011100022 U
(43) Veröffentlichungstag der Anmeldung: 05.03.2014
(73) Patentinhaber: Menlo Systems GmbH, 82152 Martinsried (DE); École Polytechnique Fédérale de Lausanne (EPFL), 1015 Lausanne (CH)
(72) Erfinder: KIPPENBERG, Tobias, 1007 Lausanne (CH); HOLZWARTH, Ronald, 81679 München (DE)
(74) Vertreter: Grünecker Patent- und Rechtsanwälte PartG mbB
(86) Internationale Anmeldenummer: PCT/EP2012/001827
(87) Internationale Veröffentlichungsnummer: WO 2012/146387

(56) Entgegenhaltungen:
- JP-A- 2009 252 905
- US-A1- 2007 182 966
- PASCAL DEL'HAYE ET AL: "Octave-spanning Tunable frequency combs on a chip", OPTICAL COMMUNICATION (ECOC), 2010 36TH EUROPEAN CONFERENCE AND EXHIBITION ON, IEEE, PISCATAWAY, NJ, USA, 19. September 2010 (2010-09-19), Seiten 1-2, XP031789700, ISBN: 978-1-4244-8536-9
- Jacob S Levy ET AL: "Monolithically integrated multiple wavelength oscillator on silicon", arXiv:0907.1077v2, 1. Januar 2009 (2009-01-01), XP55032834, Gefunden im Internet: URL:http://arxiv.org/abs/0907.1077 [gefunden am 2012-07-16]

## Beschreibung

Die Erfindung betrifft eine planare, d.h. chipbasierte Spektroskopieanordnung, die zur spektroskopischen Charakterisierung von Molekülen, Gasen oder Flüssigkeiten verwendet werden kann.

Wissenschaftliche Untersuchungen haben gezeigt, dass in einem optischen Ringresonator aus einem Material mit einer optischen Nichtlinearität dritter Ordnung, d.h. einem intensitätsabhängigen Brechungsindex, quasi "passiv" ein optischer Frequenzkamm erzeugt werden kann, wenn Licht eines Dauerstrichlasers in diesen optischen Ringresonator eingekoppelt wird. Wenn das Licht des Dauerstrichlasers im Wesentlichen einer Mode des optischen Ringresonators entspricht, können durch Vier-Wellen-Mischprozesse Seitenbänder erzeugt werden, aus denen sich insgesamt ein Frequenzkamm ergibt. Dieser Frequenzkamm kann anschließend wieder aus dem optischen Ringresonator ausgekoppelt werden. Beschrieben wird dieser Effekt in den Artikeln "Octave-spanning Tunable frequency combs on a chip", P. DEL'HAYE et al., ECOC 2010, IEEE, oder "Monolithically integrated multiple wavelength oscillator on silicon", J. Levy et al., Internet, 2009. Die US 2007/0182966 A1 beschreibt eine Spektroskopieanordnung mit Faser-Ringlasern als Frequenzkammgeneratoren, während die JP 2009-252905 A ein Monitor-System für Halbleiterlaser mit einem oder zwei Ringresonatoren offenbart.

Aufgabe der vorliegenden Erfindung ist es, im Hinblick auf den oben genannten Effekt eine möglichst effiziente und robuste Spektroskopieanordnung zur Verfügung zu stellen.

Diese Aufgabe wird gelöst durch eine Spektroskopieanordnung mit den Merkmalen des Anspruchs 1. Vorteilhafte Weiterbildungen der Erfindung sind in den Unteransprüchen angegeben.

Die Erfindung sieht vor, dass zwei (oder gegebenenfalls auch mehr) optische Ringresonatoren gemeinsam mit mindestens einem zum Einkoppeln von Licht in die Ringresonatoren vorgesehenen Wellenleiter auf einem gemeinsamen Substrat vorgesehen beziehungsweise integriert sind. Dabei sind die optischen Ringresonatoren, die beispielsweise die Form eines geometrischen Kreises mit einem Radius von 100 bis 1000 µm haben können, durch ihre Geometrie, durch ihr Material und/oder durch eine eventuell vorgesehene Beschichtung optisch geringfügig voneinander verschieden. Auch stark elliptische oder gestauchte Anordnungen der Ringe sind möglich. Dieser Unterschied zwischen den beiden optischen Ringresonatoren bewirkt eine geringfügige Abweichung des freien Spektralbereichs (FSR) der beiden Ringresonatoren, der der inversen Umlaufzeit des Lichtes im
jeweiligen Resonator entspricht. Dadurch wiederum unterscheiden sich die Modenabstände der aus den beiden Ringresonatoren in den oder die Wellenleiter ausgekoppelten Frequenzkämme geringfügig voneinander. Bei einer Überlagerung der beiden Frequenzkämme auf einer gemeinsamen Fotodiode oder einem anderen optischen Detektor können mittels der Multi-Heterodyn-Spektroskopie Schwebungsfrequenzen festgestellt und gemessen werden, die sich im Radiofrequenzbereich befinden.

Wenn nun einer der beiden Ringresonatoren und/oder der aus diesem Ringresonator ausgekoppelte Frequenzkamm einer Probe ausgesetzt wird, beispielsweise indem eine gasförmige oder flüssige Probe mit einer Oberfläche des Ringresonators oder dem sich anschließenden Wellenleiter in Kontakt gebracht wird, ändert sich die spektrale Leistungsdichte der Schwebungsfrequenzen, worauf Rückschlüsse auf die Eigenschaften der Probe gezogen werden können.

Ein wesentlicher Vorteil der erfindungsgemäßen Spektroskopieanordnung besteht darin, dass die optischen Ringresonatoren und der oder die Wellenleiter auf einem gemeinsamen Substrat integriert sind. Dadurch entfällt eine Justage, und die Spektroskopieanordnung wird äußerst robust.

Die Spektroskopieanordnung kann weiter dadurch verbessert werden, dass auch ein oder mehrere Dauerstrichlaser zum optischen Pumpen der Ringresonatoren und/oder ein optischer Detektor wie eine Fotodiode auf dem Substrat vorgesehen sind. Dazu könnten sämtliche Komponenten der Spektroskopieanordnung durch Mikrostrukturierungsmethoden (wie Lithographie oder Ätzen) aus einem gemeinsamen Substrat, insbesondere einem Halbleitersubstrat, hergestellt werden.

Eine weitere Verbesserung erhält man, indem man die (Multi-Heterodyne-) Spektroskopieanordnung selbstkalibrierend ausführt. Dazu werden die beiden Frequenzkämme aufgespalten und zweimal zur Schwebung gebracht auf zwei unterschiedlichen Photodetektoren. Eine zu untersuchende Probe wird dann in nur einen der Schwebungszweige eingebracht. Der zweite, ungestörte Pfad dient der Referenzierung. Auf diese Weise wird ein Referenz-Signals zur Bestimmung der Absorption erzeugt und dadurch eine Selbstreferenzierung des Spektrometers erreicht.

Das Phasenrauschen der erzeugten Frequenzkämme kann reduziert werden, indem eine "verbotene Kreuzung" zur Erzeugung einer starken lokalen anomalen Dispersion ausgenutzt wird. Bei Resonatoren, die zwei oder mehr Modenfamilien unterstützen, können diese Modenfamilien miteinander gekoppelt werden. Dies kann erfolgen durch eine geeignete Wahl der Resonatorgeometrie, durch Korrugationen (Unebenheiten) der Resonator-wand oder durch eine nicht kreisförmige Verformung der Resonatorgeometrie. Ziel der Anordnung ist die Erzeugung zweier gekoppelter optischer Resonanzen mit einer Kopplungsstärke, die (gemessen anhand des Frequenzabstandes) größer ist als die jeweiligen Linienbreiten der beiden zu unterschiedlichen Modenfamilien gehörenden Resonanzen, sodass der Frequenz-Abstand zur nächsthöheren und nächsttiefer liegenden Resonanz mehr als die Linienbreite der Resonanzen beträgt, und lokal hierdurch eine sehr anomale Dispersion erzeugt wird. Diese Resonanz wird gepumpt und erzeugt einen Frequenzkamm mit sehr geringem Phasenrauschen, der für die Spektroskopieanordnung genutzt wird. Die Pumplaser werden in dieser Anordnung auf die Resonanz mit geringerer Frequenz stabilisiert.

Der oder die Pumplaser der Spektroskopieanordnung sind im Normalfall Laser mit einer (einzigen) longitudinalen Mode. Es kann vorteilhaft sein, durch geeignete Modulation Seitenbänder auf diesen Laser aufzuprägen, sodass das Pumpen nicht mit nur einer Mode, sondern z.B. mit zwei oder mehr Moden erfolgt. Wenn der Modenabstand der Pumplasermoden nahe am Modenabstand des Mikroresonators liegt, kann dadurch ein Tuning des erzeugten Frequenzkammes erreicht werden. Besonders vorteilhaft ist hier eine Triple-Pumpanordnung, (d.h. eine Pumpmode mit zwei Seitenbändern), wie sie z.B. durch Phasenmodulation erreicht wird. Auch eine Amplitudenmodulation ist denkbar.

Darüber hinaus kann es sinnvoll sein, das erzeugte Pumplicht in einem optischen Verstärker nachzuverstärken, d.h. einen Seedlaser und einen ihm nachgeschalteten optischen Verstärker einzusetzen. Dabei kann es sich um einen Faser- oder Halbleiterbasierten Verstärker handeln. Bei der Moduation kann auch ein Mach-Zehnder-Interferometer zum Einsatz kommen.

Für das Einbringen der zu untersuchenden Substanz in die Spektroskopieanordnung kann auf Techniken der Mikrofluidik zurückgegriffen werden. Dabei kann die zu untersuchende Substanz in Kanälen geleitet und so mit dem Mikroresonator gezielt in Kontakt gebracht werden. Dazu werden entsprechende Kanäle über den Wellenleiter des Mikroresonators angebracht.

Die Erfindung bezieht sich auch auf ein Verfahren zum Herstellen einer solchen Spektroskopieanordnung sowie auf die Verwendung einer solchen Spektroskopieanordnung zur spektroskopischen Untersuchung von Proben, beispielsweise von Molekülen, Gasen oder Flüssigkeiten.

Im Folgenden werden verschiedene Ausführungsformen einer erfindungsgemäßen Spektroskopieanordnung anhand einer Zeichnung näher erläutert. Im Einzelnen zeigen:
- Fig. 1: eine schematische Darstellung der Wellenleiter und Ringresonatoren,
- Fig. 2: eine schematische Darstellung der Zusammenführung der beiden Frequenzkämme,
- Fig. 3: eine schematische Darstellung des Verlaufs der Wellenleiter in einem zweiten Ausführungsbeispiel,
- Fig. 4: eine schematische Darstellung eines dritten Ausführungsbeispiels einer Spektroskopieanordnung,
- Fig. 5: eine schematische Darstellung der Spektroskopieanordnung gemäß Fig. 4 mit dem Substrat,
- Fig. 6: eine schematische Darstellung der Spektroskopieanordnung gemäß Fig. 3 mit dem Substrat,
- Fig. 7: eine schematische Darstellung der Spektroskopieanordnung gemäß Fig. 4 mit der Ein- und Auskopplung,
- Fig. 8: eine Variante der in Figur 7 gezeigten Spektroskopieanordnung,
- Fig. 9: eine Spektroskopieanordnung mit einer Probe,
- Fig. 10: eine Spektroskopieanordnung mit einer anderen Anordnung der Probe, und
- Fig. 11: eine Spektroskopieanordnung mit Selbstreferenzierung.

Gleiche oder einander entsprechende Komponenten sind in den Figuren durchgängig mit gleichen Bezugszeichen versehen.

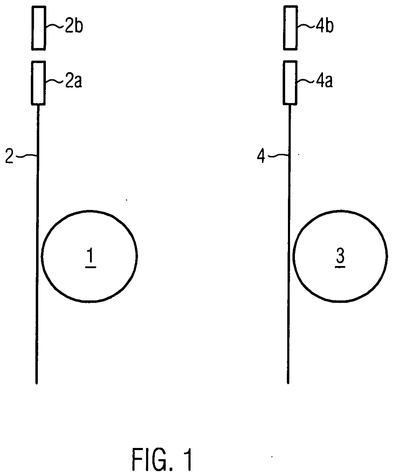

In der ersten Ausführungsform (Fig. 1) werden auf einem Substrat oder Halbleiterchip (beispielsweise aus Silizium) durch Mikrostrukturierungsmethoden zwei optische Ring-Mikroresonatoren 1, 3 sowie zwei Wellenleiter 2, 4 erzeugt, die aus einem Material bestehen wie z.B. SiN, HfO2 oder Silizium. Die beiden Wellenleiter 2, 4 sind an jeweils eine optische Faser 2a, 4a gekoppelt, welche an jeweils eine Dauerstrichlaserquelle 2b, 4b gekoppelt sind. Das Einkoppeln in den Wellenleiter 2, 4 kann dabei beispielsweise durch eine Linse bewerkstelligt werden. Der auf dem Chip bzw. Substrat befindliche Wellenleiter 2, 4 koppelt jeweils an einen optischen ringförmigen Mikroresonatoren 1, 3. Koppeln bedeutet dabei, dass ein Teil der einfallenden optischen Laserleistung in den Resonator 1, 3 eingekoppelt wird durch eine evaneszente Kopplung und entsprechende Modenanpassung.

Die beiden ringförmigen Mikroresonatoren 1, 3 sind dadurch gekennzeichnet, dass ihre freien Spektralbereiche, gekennzeichnet als die inverse Umlaufzeit des Lichtes im Resonator, sich um einen Bruchteil des mittleren freien Spektralbereiches der beiden Resonatoren 1, 3 unterscheiden, typischerweise weniger als 1/100. Der optische ringförmige Mikroresonator 1, 3 besitzt dabei ein Material, welches eine Nichtlinearität dritter Ordnung besitzt, d.h. einen intensitäts-abhängigen Brechungsindex. Dabei bedarf es eines Materials mit Inversionssymmetrie. Des Weiteren besitzen die Resonatoren 1, 3 eine geringe Abweichung des freien Spektralbereiches durch eine geeignete Wahl der Geometrie des ringförmigen Mikroresonators 1, 3 und geeigneter Beschichtungen. Die residuelle Variation des freien Spektralbereiches wird dabei so gewählt, dass der FSR (freie Spektralbereich) mit steigender Frequenz zunimmt (Anomale Dispersion).

Die beiden Dauerstrichlaser 2b, 4b strahlen eine optische Frequenz ein, welche nahe resonant ist mit einer Eigenfrequenz einer der optischen Moden des Mikroresonators 1, 3. Die Leistung wird so angepasst, dass eine parametrische Oszillation stattfindet, welche eine Erzeugung von vielen parametrischen Seitenbändern mit annähernd gleicher Leistung und einem Abstand, der dem freien Spektralbereich des Resonators 1, 3 entspricht, ermöglicht (d.h. ein Frequenzkamm erzeugt wird). Die neu erzeugten FrequenzKomponenten des Frequenzkammes werden nachfolgend wieder in den Wellenleiter 2, 4 ausgekoppelt und jeweils wieder in zwei optische Fasern eingekoppelt und auf einer gemeinsamen Photodiode zur Interferenz gebracht. Ein Detektor detektiert auf der Photodiode die Schwebungsfrequenzen, welche nachfolgend spektral analysiert werden. Die Laserleistung und Laserfrequenz des Dauerstrichlasers 2b, 4b werden dabei so angepasst, dass eine Vielzahl von Schwebungen entstehen in einem gleichmäßigen Abstand im Radiofrequenzbereich.

Zur spektroskopischen Untersuchung von Gasen, Molekülen oder Flüssigkeiten wird in der Anordnung einer der beiden Resonatoren direkt der zu untersuchenden Substanz ausgesetzt. Die Interaktion geschieht dabei über das evaneszente Feld des Resonators 1, 3, welches hierzu direkt mit der zu untersuchenden Substanz in Kontakt treten kann. Dies kann beispielsweise dadurch realisiert werden, dass das Gas (Flüssigkeit, etc) direkt im Kontakt mit der Oberfläche des dielektrischen ringförmigen Wellenleiters steht. Die spektroskopische Information wird dabei aus dem Schwebungssignal extrahiert gemäß der bekannten Technik der Multi-Heterodyn-Spektroskopie. Die spektrale Bandbreite des aufgezeichneten Spektrums umfasst dabei das Spektrum der erzeugten parametrischen Seitenbänder des Frequenzkammes.

In der Spektroskopieanordnung gemäß Fig. 1 steht ein Ringresonator 1 in Kontakt mit einem Wellenleiter 2 (Faser, getaperte Faser, SiN-Waveguide etc.). Wird in den Wellenleiter 2 Licht eines Dauerstrichlasers 2b eingekoppelt (in Fig. 1 also von oben kommend), wird das Licht in den Ringresonator 1 übergekoppelt und es wird im Resonator "passiv" ein Frequenzkamm mit einem Modenabstand f1 erzeugt.

Ein zweiter Ringresonator 3 wird mit einem Wellenleiter 4 in einer ähnlichen Konfiguration betrieben und erzeugt einen Frequenzkamm mit Modenabstand f2, der von f1 verschieden ist.

Die beiden so erzeugten Frequenzkämme werden wieder zusammengeführt und können dann zu einer Multiheterodyn-Spektroskopie verwendet werden.

Die Resonatoren 1, 3 haben jeweils einen Abstand von zirka 0 bis 1000 µm von dem ihnen zugeordneten Wellenleiter 2, 4, und einen Durchmesser von zirka 120 bis 160 µm.

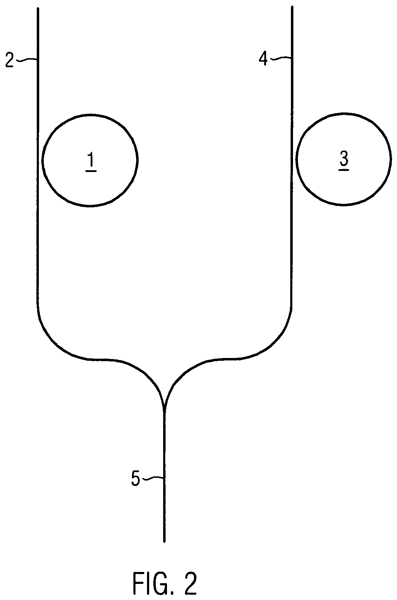

Die Zusammenführung der beiden Wellenleiter kann - wie in Fig. 2 gezeigt - durch faseroptische Bauteile, oder direkt durch entsprechende Formung der Wellenleiter in SiN auf einem Si-Chip erreicht werden. Es gibt dann einen gemeinsamen Ausgang 5, der beide Frequenzkämme mit Modenabständen f1 und f2 enthält.

Mehrere alternative Ausführungsformen, die äquivalent sind in ihrer Funktionsweise, werden nachfolgend beschrieben:
a) Zwei Dauerstrichlaser 2b, 4b werden in eine einzige Faser gekoppelt und in einen einzigen planaren Wellenleiter gekoppelt. Der planare Wellenleiter wird auf dem Substrat (Chip) aufgespalten und pumpt zwei separate ringförmige Mikroresonatoren. Die Frequenzen der Dauerstrichlaser sind dabei verschieden und sind jeweils nahe resonant mit optischen Moden der jeweiligen beiden ringförmigen Mikroresonatoren.
b) Die beiden Dauerstrichlaser werden in eine einzige Faser gekoppelt und in einen einzigen Wellenleiter gekoppelt, an dem sich beide optischen Mikroresonatoren befinden.
c) Die beiden Dauerstrichlaser werden durch einen einzigen Dauerstrichlaser ersetzt, der an einen einzigen Wellenleiter koppelt. Dieser Wellenleiter ist an zwei optische Mikroresonatoren gekoppelt, deren freie Spektralbereiche sich unterscheiden, die allerdings eine gemeinsame Resonanzfrequenz besitzen, die nahe der Frequenz des eingestrahlten Dauerstrichlasers liegt.
d) Die Mikroresonatoren können jeweils mit zwei Wellenleitern gekoppelt werden, wobei einer zum Pumpen mit dem Dauerstrichlaser dient und der zweite Wellenleiter zum Auskoppeln der im Resonator befindlichen Frequenzkomponenten dient. Das in diesen zweiten Wellenleiter ausgekoppelte Licht wird zur Interferenz genutzt und zur Bestimmung des optischen Spektrums mittels der Multi-Heterodyn-Methode.

Die Anordnung der spektralen Analyse von Gasen oder Flüssigkeiten kann dabei ebenfalls mehrere Ausführungsformen annehmen:
A) Das Gas oder die zu detektierende Flüssigkeit kann anstatt direkt auf einer der Oberflächen des Mikroresonators auch mit der Oberfläche eines der Wellenleiter interagieren und somit das Frequenzkammspektrum in seiner Intensität und/oder Phase verändern. Der Referenzfrequenzkamm wird dabei nicht dem Gas oder der Flüssigkeit ausgesetzt.
B) Das Gas oder die zu detektierende Flüssigkeit kann dem erzeugten Frequenzkamm in einer separaten Anordnung zugeführt werden, mit Hilfe einer optischen Faser, in welche der Wellenleiter den Frequenzkamm auskoppelt. Der ReferenzFrequenzkamm wird dabei nicht dem Gas oder der Flüssigkeit ausgesetzt.

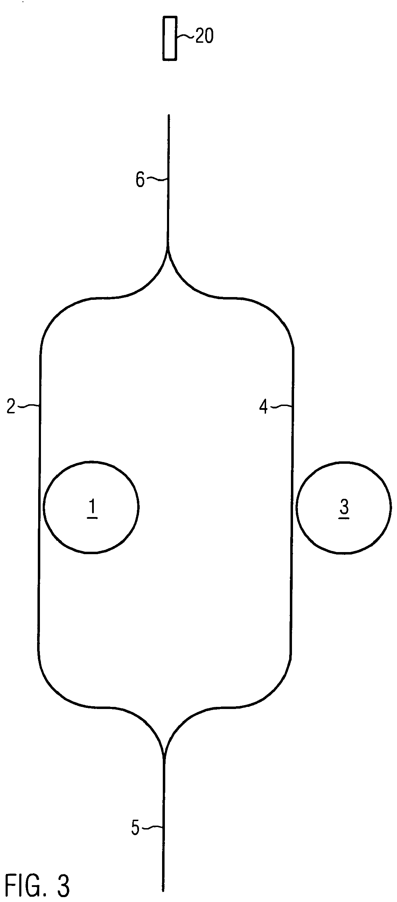

Fig. 3 zeigt eine Variante der Spektroskopieanordnung, bei der ein gemeinsamer Dauerstrichlaser 20 für beide Resonatoren 1, 3 verwendet wird. Die Aufspaltung der cw-Laserstrahlung in die beiden Wellenleiter 2, 4 erfolgt dann über ein Faseroptisches Bauteil 6 oder einen entsprechend geformten On-Chip-Waveguide.

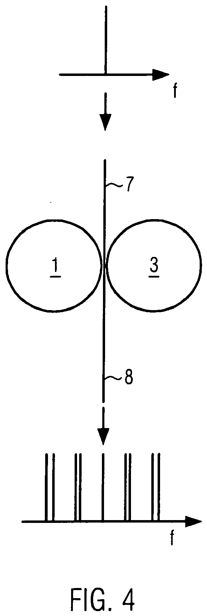

In einer anderen, in Fig. 4 gezeigten Geometrie koppelt ein gemeinsamer Wellenleiter bzw. Waveguide 7 an zwei Resonatoren gleichzeitig und erzeugt so zwei Frequenzkämme mit den Modenabständen f1 und f2, die auf der Auskoppelseite 8 wieder in den gemeinsamen Wellenleiter 7 ausgekoppelt werden.

Oberhalb der Spektroskopieanordnung ist in Fig. 4 schematisch das Linienspektrum der cw-Laserstrahlung gezeigt, unterhalb der Anordnung das ausgekoppelte Frequenzspektrum der beiden miteinander überlagerten Frequenzkämme.

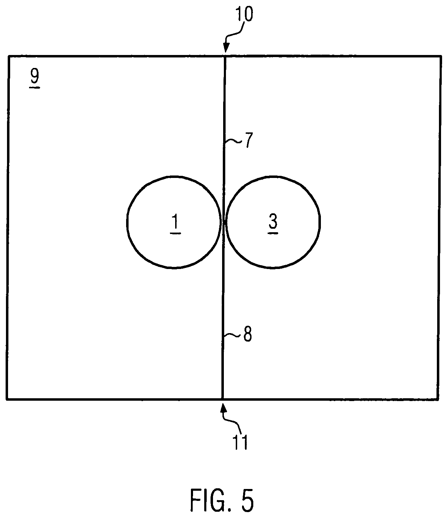

Fig. 5 zeigt die Spektroskopieanordnung gemäß Fig. 4, nun jedoch mit dem (Halbleiter-) Substrat 9, auf dem die Ringresonatoren 1, 3 sowie der gemeinsame Wellenleiter 7 liegen. Auf dem Substrat bzw. Träher (Chip) 9 befinden sich eine Einkoppelstelle 10 für die cw-Laserstrahlung und eine Auskoppelstelle 11 für die von den beiden Resonatoren 1, 3 erzeugten Frequenzkämme.

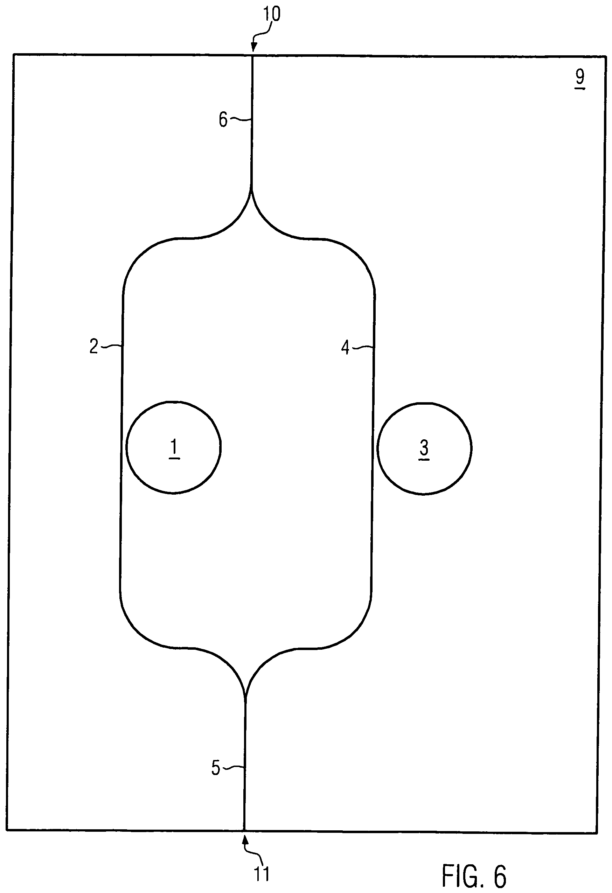

Entsprechendes gilt auch für die Anordnung mit zwei ankoppelnden Waveguides 2, 4. Fig. 6 zeigt die Spektroskopieanordnung von Fig. 3, diesmal jedoch mit dem Substrat 9, der Einkoppelstelle 10 und der Auskoppelstelle 11. Diese Ein- oder Auskoppelstellen 10, 11 können entfallen, wenn der oder die cw-Laser und/oder ein Photodetektor auf dem Substrat/Chip 9 integriert sind.

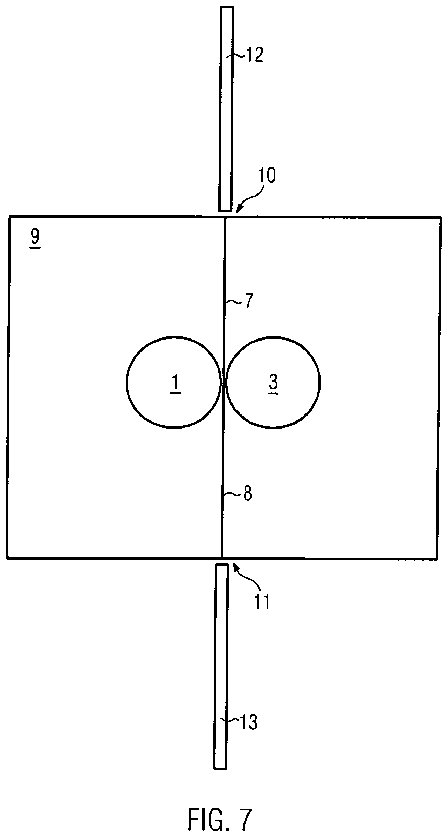

Um Licht in die Waveguides 7 einzukoppeln, kann eine Glasfaser 12 auf der Einkoppelseite an den Wellenleiter 7 angesetzt werden (sog. butt coupling). Auf der Auskoppelseite gilt Ähnliches. Gezeigt ist dies in Fig. 7.

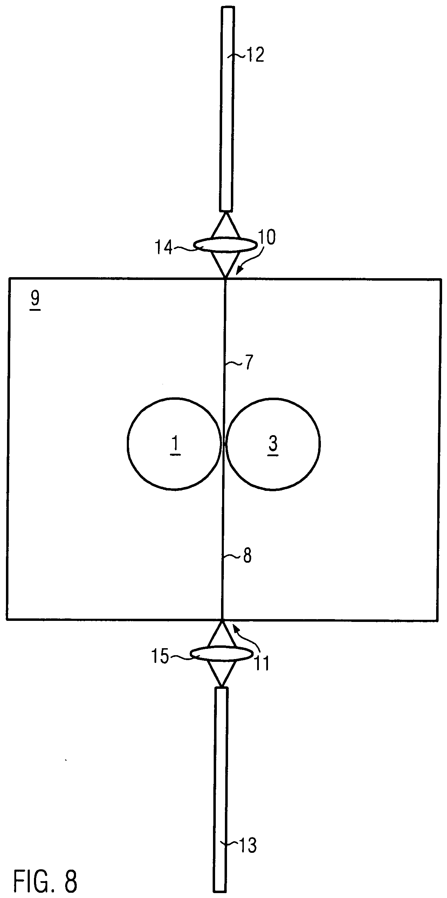

Zur Verbesserung der Ein und Auskopplung aus der Glasfaser 12 in den Wellenleiter 7 bzw. vom Wellenleiter 8 in die Auskoppel-Glasfaser 13 kann eine Linse 14, 15 zwischen dem Wellenleiter und der Glasfaser 12, 13 verwendet werden. Gezeigt ist dies in Fig. 8. Die beiden in Fig. 7 und Fig. 8 gezeigten Varianten der Ein- oder Auskopplung von Licht in bzw. aus den Wellenleitern 2, 4, 7, 8 können in allen Ausführungsbeispielen verwendet werden.

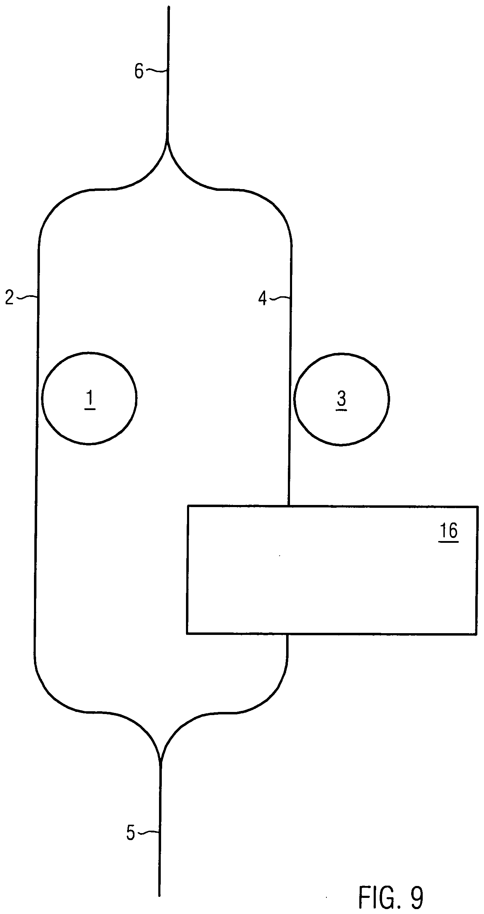

Zur Ausführung der Multiheterodynspektroskopie kann - wie in Fig. 9 gezeigt - eine Probe 16 in einen Arm der Spektroskopieanordnung eingefügt werden.

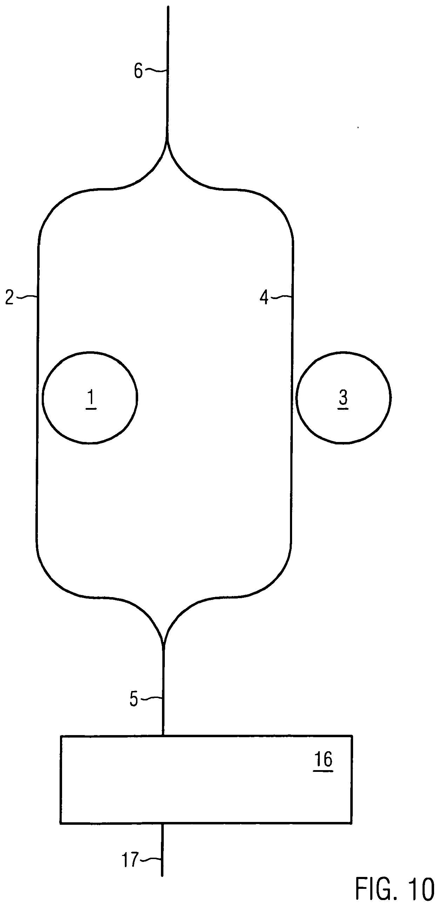

Alternativ kann die Probe 16 auch - wie in Fig. 10 gezeigt - hinter der Zusammenführung 5 angeordnet sein und so von beiden Frequenzkammkämmen durchstrahlt werden. Der Ausgang 17 führt dann auf einen Photodetektor.

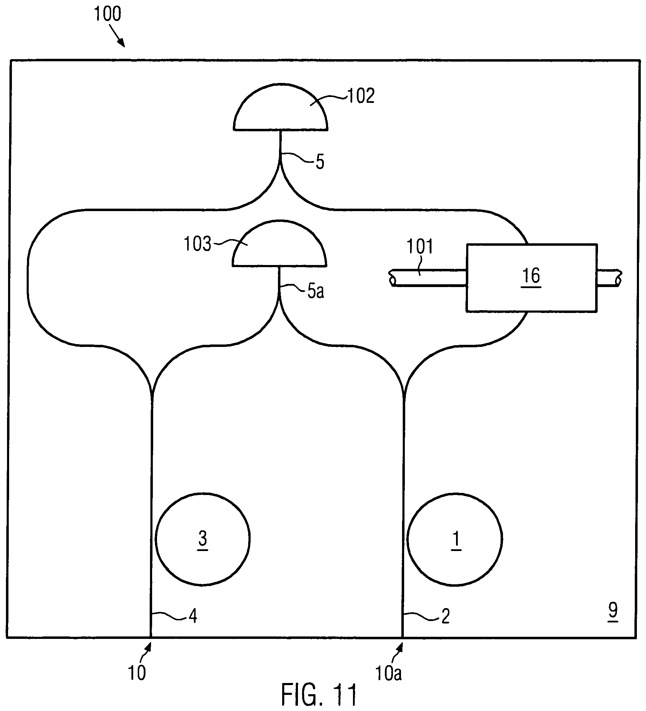

Fig. 11 zeigt eine weitere Variante der erfindungsgemäßen Spektroskopieanordnung 100. Dieses Ausführungsbeispiel der Spektroskopieanordnung basiert auf dem in Fig. 9 gezeigten Ausführungsbeispiel - bis darauf, dass beim Ausführungsbeispiel nach Fig. 11 zwei Einkoppelstellen 10, 10a für die Laserstrahlung vorgesehen sind und sich das Licht in den beiden Wellenleitern 2, 4 in Fig. 11 von unten nach oben ausbreitet, nicht mehr (wie in Fig. 9) von oben nach unten. Abermals sind jedoch die beiden Ringresonatoren 1, 3 sowie die Wellenleiter 2, 4 und die Zusammenführung 5 der beiden Wellenleiter 2, 4 (d.h. die Auskoppelstelle 5) auf einem gemeinsamen Substrat 9 angeordnet. In dem einen Arm der Spektroskopieanordnung 100, nämlich im Verlauf des Wellenleiters 2, befindet sich zudem eine Probenkammer 16. Die zu untersuchende Probe kann mit Techniken der Mikrofluidik in diese Probenkammer 16 eingeleitet werden, insbesondere mit Mikrofluidkanälen 101. Diese sind ebenfalls auf dem Substrat 9 vorgesehen. Des Weiteren ist auf dem Substrat 9 ein Detektor 102 angeordnet oder ausgebildet, beispielsweise eine Photodiode. Auf diesen ersten Detektor 102 wird das Licht aus dem Ausgang 5 der Spektroskopieanordnung 100 geleitet, um dort ein Schwebungssignal zu messen.

Über diese bereits im Ausführungsbeispiel nach Fig. 9 vorhandenen Merkmale hinaus verfügt die Spektroskopieanordnung 100 gemäß Fig. 11 über einen zweiten Detektor 103, bei dem es sich ebenfalls um eine Photodiode handeln kann und der ebenfalls auf dem Substrat 9 vorgesehen oder angeordnet ist. Auf diesen zweiten Photodetektor 103 wird das Licht eines zweiten Ausgangs 5a der Spektroskopieanordnung 100 geleitet. Zu diesem zweiten Ausgang 5a wird Licht aus den beiden Wellenleitern 2, 4 geleitet, ohne dass jedoch in einem der beiden Pfade die Probe vorhanden wäre. Damit kann das vom zweiten Photodetektor 103 erzeugte Signal mit dem Signal des ersten Photodetektors 102 verglichen werden und damit zur Selbstkalibrierung der Spektroskopieanordnung 100 herangezogen werden.

## Patentansprüche

1. Spektroskopieanordnung mit mindestens einem Dauerstrichlaser (2b, 4b, 20), einem optischen Detektor (102) sowie einem ersten und einem zweiten optischen Ringresonator (1, 3), die jeweils ein Material mit einem intensitätsabhängigen Brechungsindex aufweisen,
ferner mit mindestens einem Wellenleiter (2, 4, 7, 8), der oder die in einem solchen Abstand an den optischen Ringresonatoren entlang geführt sind, dass in dem Wellenleiter (2, 4, 7) geführtes Licht des Dauerstrichlasers (2b, 4b, 20) in die optischen Ringresonatoren (1, 3) einkoppelbar ist und ein aus dem Licht des Dauerstrichlasers im jeweiligen optischen Ringresonator (1, 3) erzeugter Frequenzkamm in den oder die Wellenleiter (2, 4, 8) auskoppelbar ist,
wobei die optischen Ringresonatoren (1, 3) und der mindestens eine Wellenleiter (2, 4, 7, 8) auf einem gemeinsamen Substrat (9) angeordnet sind,
und wobei die beiden optischen Ringresonatoren (1, 3) durch ihre Geometrie, durch ihr Material und/oder durch eine Beschichtung derart optisch voneinander verschieden sind, dass sich die spektrale Leistungsdichte von Schwebungsfrequenzen der auf dem optischen Detektor (102) überlagerten Frequenzkämme ändert, wenn einer der beiden optischen Ringresonatoren (1, 3) und/oder ein sich daran anschliessender Wellenleiter, der den aus einem der optischen Ringresonatoren (1, 3) ausgekoppelter Frequenzkamm leitet, mit einer Probe (16) in Kontakt gebracht wird.

2. Spektroskopieanordnung nach Anspruch 1, **dadurch gekennzeichnet, dass** sich die freien Spektralbereiche der beiden optischen Ringresonatoren (1, 3) um weniger als ein Hundertstel des mittleren freien Spektralbereiches der beiden Ringresonatoren (1, 3) voneinander unterscheiden.

3. Spektroskopieanordnung nach einem der vorangehenden Ansprüche, **dadurch gekennzeichnet, dass** es sich bei dem Substrat (9) um einen Halbleiterchip handelt, wobei das Substrat (9) vorzugsweise Silizium aufweist.

4. Spektroskopieanordnung nach einem der vorangehenden Ansprüche, **dadurch gekennzeichnet, dass** ein gemeinsamer Wellenleiter (7) zum Einkoppeln von Dauerstrichlaserstrahlung in beide Ringresonatoren (1, 3) vorhanden ist.

5. Spektroskopieanordnung nach einem der Ansprüche 1 bis 3, **dadurch gekennzeichnet, dass** für jeden optischen Ringresonator (1, 3) ein eigener Wellenleiter (2, 4) vorhanden ist.

6. Spektroskopieanordnung nach Anspruch 5, **dadurch gekennzeichnet, dass** auf der Einkoppelseite für die Strahlung des Dauerstrichlasers (2b, 4b, 20) ein gemeinsamer Wellenleiter auf dem Substrat (9) in zwei Wellenleiter (2, 4) aufgespalten ist.

7. Spektroskopieanordnung nach einem der vorangehenden Ansprüche, **dadurch gekennzeichnet, dass** jeder Ringresonator (1, 3) jeweils mit zwei Wellenleitern (2, 4) gekoppelt ist, wobei einer zum Pumpen des Ringresonators (1, 3) mit dem Licht des Dauerstrichlasers (2b, 4b, 20) und der andere Wellenleiter zum Auskoppeln des Frequenzkamms aus dem Ringresonator (1, 3) dient.

8. Spektroskopieanordnung nach einem der vorangehenden Ansprüche, **dadurch gekennzeichnet, dass** ein gemeinsamer Dauerstrichlaser (20) oder zwei separate Dauerstrichlaser (2b, 4b) zum Pumpen der beiden optischen Ringresonatoren (1, 3) vorhanden sind.

9. Spektroskopieanordnung nach einem der vorangehenden Ansprüche, **dadurch gekennzeichnet, dass** der mindestens eine Dauerstrichlaser (2b, 4b, 20) auf demselben Substrat (9) wie die optischen Ringresonatoren (1, 3) und der mindestens eine Wellenleiter (2, 4, 7, 8) angeordnet ist.

10. Spektroskopieanordnung nach einem der vorangehenden Ansprüche, **dadurch gekennzeichnet, dass** der mindestens eine optische Detektor (102) auf demselben Substrat (9) wie die optischen Ringresonatoren (1, 3) und der mindestens eine Wellenleiter (2, 4, 7, 8) angeordnet ist.

11. Spektroskopieanordnung nach einem der vorangehenden Ansprüche, **dadurch gekennzeichnet, dass** der mindestens eine Dauerstrichlaser (2b, 4b, 20) einen Seedlaser und einen diesem nachgeschalteten optischen Verstärker aufweist.

12. Spektroskopieanordnung nach einem der vorangehenden Ansprüche, **dadurch gekennzeichnet, dass** als optische Detektoren zwei Photodetektoren (102, 103) vorhanden sind, wobei beiden Photodetektoren (102, 103) jeweils Licht von beiden optischen Ringresonatoren (1, 3) zuführbar ist, wobei jedoch nur in einem der beiden zu einem der beiden Photodetektoren (102, 103) führenden Pfade des Lichtes eine Probenkammer (16) vorhanden ist.

13. Spektroskopieanordnung nach einem der vorangehenden Ansprüche, **dadurch gekennzeichnet, dass** eine über Mikrofluidkanäle (101) versorgte Probenkammer (16) vorhanden ist.

14. Spektroskopieanordnung nach einem der vorangehenden Ansprüche, **dadurch gekennzeichnet, dass** zum Pumpen wenigstens eines der optischen Ringresonatoren (1, 3) eine Multimode-Pumplichtquelle mit zwei oder mehr longitudinalen Moden mit abstimmbarem Modenabstand vorhanden ist.

15. Spektroskopieanordnung nach einem der vorangehenden Ansprüche, **dadurch gekennzeichnet, dass** mindestens ein Ringresonator (1, 3) Korrugationen der Resonator-Wand oder eine nicht-kreisförmige Verformung der Resonator-Geometrie aufweist.

## Claims

1. A spectroscopy array having at least one continuous wave laser (2b, 4b, 20), an optical detector (102) and a first and a second optical ring resonator (1, 3) which each contain a material with an intensity-dependent refractive index,
furthermore having at least one waveguide (2, 4, 7, 8) which is guided along the optical ring resonators at such a distance that light of the continuous wave laser (2b, 4b, 20) guided in the waveguide (2, 4, 7) can be coupled into the optical ring resonators (1, 3) and a frequency comb generated from the light of the continuous wave laser in the respective optical ring resonator (1, 3) can be coupled out into the waveguide or waveguides (2, 4, 8),
the optical ring resonators (1, 3) and said at least one waveguide (2, 4, 7, 8) being arranged on a common substrate (9),
and wherein the two optical ring resonators (1, 3) are optically different from one another by their geometry, by their material and/or by a coating in such a way that the spectral power density of beat frequencies of the frequency combs superimposed on the optical detector (102) changes, when one of the two optical ring resonators (1, 3) and/or a waveguide connected thereto, which conducts the frequency comb coupled out of one of the optical ring resonators (1, 3), is brought into contact with a sample (16).

2. A spectroscopy array according to claim 1, **characterised in that** the free spectral regions of the two optical ring resonators (1, 3) differ from one another by less than one hundredth of the mean free spectral region of the two ring resonators (1, 3).

3. A spectroscopy array according to one of the preceding claims, **characterised in that** the substrate (9) is a semiconductor chip, the substrate (9) preferably comprising silicon.

4. A spectroscopy array according to one of the preceding claims, **characterised in that** a common waveguide (7) for coupling continuous wave laser radiation into both ring resonators (1, 3) is provided.

5. A spectroscopy array according to one of claims 1 to 3, **characterised in that** for each optical ring resonator (1, 3) a separate waveguide (2, 4) is provided.

6. A spectroscopy array according to claim 5, **characterised in that** on the single-coupling side for the radiation of the continuous wave laser (2b, 4b, 20) a common waveguide on the substrate (9) is split into two waveguides (2, 4).

7. A spectroscopy array according to one of the preceding claims, **characterised in that** each ring resonator (1, 3) is coupled in each case to two waveguides (2, 4), one waveguide serving to pump the ring resonator (1, 3) with the light of the continuous wave laser (2b, 4b, 20) and the other waveguide serving to decouple the frequency comb from the ring resonator (1, 3).

8. A spectroscopy array according to one of the preceding claims, **characterised in that** a common continuous wave laser (20) or two separate continuous wave lasers (2b, 4b) are provided for pumping both optical ring resonators (1, 3).

9. A spectroscopy array according to one of the preceding claims, **characterised in that** said at least one continuous wave laser (2b, 4b, 20) is arranged on the same substrate (9) as the optical ring resonators (1, 3) and said at least one waveguide (2, 4, 7, 8).

10. A spectroscopy arrangement according to one of the preceding claims, **characterised in that** said at least one optical detector (102) is arranged on the same substrate (9) as the optical ring resonators (1, 3) and said at least one waveguide (2, 4, 7, 8) is arranged on the same substrate (9).

11. A spectroscopy array according to one of the preceding claims, **characterised in that** said at least one continuous wave laser (2b, 4b, 20) comprises a seed laser and an optical amplifier connected downstream thereof.

12. A spectroscopy array according to one of the preceding claims, **characterised in that** two photodetectors (102, 103) are provided as optical detectors, in which two photodetectors (102, 103) can each be supplied with light from both optical ring resonators (1, 3), a sample chamber (16) being present, however, only in one of the two paths of the light leading to one of the two photodetectors (102, 103).

13. A spectroscopy array according to one of the preceding claims, **characterised in that** a sample chamber (16) supplied via microfluid channels (101) is present.

14. A spectroscopy array according to one of the preceding claims, **characterised in that** for pumping at least one of the optical ring resonators (1, 3) there is a multimode pump light source with two or more longitudinal modes with tunable mode spacing.

15. A spectroscopy array according to one of the preceding claims, **characterised in that** said at least one ring resonator (1, 3) has corrugations of the resonator wall or a non-circular deformation of the resonator geometry.

## Revendications

1. Dispositif de spectroscopie comportant au moins un laser à ondes continues (2b, 4b, 20), un détecteur optique (102) et un premier et un seconde résonateur annulaires optiques (1, 3) qui contiennent chacun un matériau ayant un indice de réfraction dépendant de l'intensité,
comportant en outre au moins un guide d'ondes (2, 4, 7, 8) qui est guidé le long des résonateurs annulaires optiques à une distance telle que la lumière du laser à ondes continues (2b, 4b, 20) guidée dans le guide d'ondes (2, 4, 7) peut être couplée dans les résonateurs annulaires optiques (1, 3) et un peigne de fréquence généré par la lumière du laser à ondes continues dans le résonateur annulaires optiques respectif (1, 3) peut être couplé dans le guide ou les guides d'ondes (2, 4, 8),
les résonateurs annulaires optiques (1, 3) et ledit au moins un guide d'ondes (2, 4, 7, 8) étant disposés sur un substrat commun (9),
et dans lequel les deux résonateurs annulaires optiques (1, 3) sont optiquement différents l'un de l'autre par leur géométrie, par leur matériau et/ou par un revêtement de telle sorte que la densité spectrale de puissance des fréquences de battement des peignes de fréquence superposés au détecteur optique (102) change lorsque l'un des deux résonateurs annulaires optiques (1, 3) et/ou un guide d'ondes qui leur est relié, qui conduit le peigne de fréquence couplé depuis l'un des résonateurs annulaires optiques (1, 3) est amené en contact avec un échantillon (16).

2. Dispositif de spectroscopie selon la revendication 1, **caractérisé en ce que** les zones spectrales libres des deux résonateurs en anneau optiques (1, 3) diffèrent l'une de l'autre de moins d'un centième de la zone spectrale libre moyenne des deux résonateurs annulaires (1, 3).

3. Dispositif de spectroscopie selon l'une des revendications précédentes, **caractérisé en ce que** le substrat (9) est une puce semi-conductrice, le substrat (9) comprenant de préférence du silicium.

4. Dispositif de spectroscopie selon l'une des revendications précédentes, **caractérisé en ce qu'**un guide d'ondes commun (7) est prévu pour coupler un rayonnement laser à ondes continues dans les deux résonateurs annulaires (1, 3).

5. Dispositif de spectroscopie selon l'une des revendications 1 à 3, **caractérisé en ce qu'**un guide d'ondes (2, 4) séparé est prévu pour chaque résonateur annulaire optique (1, 3).

6. Dispositif de spectroscopie selon la revendication 5, **caractérisé en ce qu'**un guide d'ondes commun sur le substrat (9) est divisé en deux guides d'ondes (2, 4) sur le côté à couplage unique pour le rayonnement du laser à ondes continues (2b, 4b, 20).

7. Dispositif de spectroscopie selon l'une des revendications précédentes, **caractérisé en ce que** chaque résonateur annulaire (1, 3) est couplé à deux guides d'ondes (2, 4),
un guide d'ondes servant à pomper le résonateur annulaire (1, 3) avec la lumière du laser à ondes continues (2b, 4b, 20) et l'autre guide d'ondes servant à découpler le peigne de fréquence du résonateur annulaire (1, 3).

8. Dispositif de spectroscopie selon l'une des revendications précédentes, **caractérisé en ce qu'**un laser à ondes continues commun (20) ou deux lasers à ondes continues séparés (2b, 4b) sont prévus pour pomper les deux résonateurs annulaires optiques (1, 3).

9. Dispositif de spectroscopie selon l'une des revendications précédentes, **caractérisé en ce que** ledit au moins un laser à ondes continues (2b, 4b, 20) est disposé sur le même substrat (9) que les résonateurs annulaires optiques (1, 3) et ledit au moins un guide d'ondes (2, 4, 7, 8).

10. Dispositif de spectroscopie selon l'une des revendications précédentes, **caractérisé en ce que** ledit au moins un détecteur optique (102) est disposé sur le même substrat (9) que les résonateurs annulaires optiques (1, 3) et ledit au moins un guide d'ondes (2, 4, 7, 8) est disposé sur le même substrat (9).

11. Dispositif de spectroscopie selon l'une des revendications précédentes, **caractérisé en ce que** ledit au moins un laser à ondes continues (2b, 4b, 20) comprend un laser à graine et un amplificateur optique connecté en aval.

12. Dispositif de spectroscopie selon l'une des revendications précédentes, **caractérisé en ce que** deux photodétecteurs (102, 103) sont prévus en tant que détecteurs optiques, dans lesquels deux photodétecteurs (102, 103) peuvent être alimentés chacun en lumière par les deux résonateurs annulaires optiques (1, 3), une chambre à échantillon (16) étant présente, cependant, seulement dans l'un des deux chemins de la lumière menant à l'un des deux photodétecteurs (102, 103).

13. Dispositif de spectroscopie selon l'une des revendications précédentes, **caractérisé en ce qu'**une chambre à échantillon (16) alimentée par des canaux microfluides (101) est présente.

14. Dispositif de spectroscopie selon l'une des revendications précédentes, **caractérisé en ce que** pour pomper au moins l'un des résonateurs annulaires optiques (1, 3), il existe une source lumineuse multimode à pompe avec deux ou plusieurs modes longitudinaux à espacement modal accordable.

15. Dispositif de spectroscopie selon l'une des revendications précédentes, **caractérisé en ce que** ledit au moins un résonateur annulaire (1, 3) présente des ondulations de la paroi du résonateur ou une déformation non circulaire de la géométrie du résonateur.
